# EUROPEAN PATENT APPLICATION

(11) **EP 3 024 303 A2**
(43) Date of publication of application: **25.05.2016**
(21) Application number: 15189153.8
(22) Date of filing: 09.10.2015
(51) Int. Cl.: H05B 33/08

(54) **LED TUBE POWER DRIVE CIRCUIT AND LED TUBE**

(30) Priority: 21.11.2014 CN 201410675899
(71) Applicant: Zhejiang CH Lighting Co., Ltd., Shaoxing City, Zhejiang 312369 (CN)
(72) Inventor: Guosong, Zhao, 312369 Zhengjiang (CN)
(74) Representative: Gulde & Partner

(57) **Abstract**

This present invention discloses a type of LED tube Power Drive Circuit, including a high-frequency power module, a low-frequency power module, and a switching-circuit for both modules. This present invention therefore allows the high-frequency power module to work with all E-Ballast, without being disturbed by the rest circuit.

## Description

### Technical Field

This application relates to a power drive circuit, specifically involving a LED tube power drive circuit.

### Background Technology

Fluorescent lamps are the most common lighting source in business offices and civil residences; and normally adopt fluorescent tubes. LED (also referred to as light emitting diodes), with its advantage on energy saving and environment protection, along with its improving technology, will eventually substitute fluorescent tubes. The existing fluorescent lamps are usually installed with a ballast and output alternating current; though LED lamps need direct current drive, so the current lamp's circuit should be re-wired before substituted by LED lamps.

CN 203596948 U discloses a LED drive circuit compatible with E-ballasts, comprising: 1. a step-down current limiting circuit to reduce voltage & limit current outputted by ballast, and outputs alternating current; 2. a high-frequency rectifying circuit to rectify the alternating current as mentioned, and outputs the direct current I; 3. A filtering circuit to filter direct current as mentioned and output to LED; 4. A high voltage absorbing circuit, connecting with input port of the step-down current limiting circuit, comprises 1). a filtering circuit to transfer E-ballast's output to direct current II; 2).an absorbing circuit to absorb direct current II as mentioned; 3). a switching circuit to on-off control the filtering circuit and absorbing circuit both as mentioned; 4. a time delaying circuit to control the switching circuit as mentioned.

The LED tubes comprising driving circuit as described above can directly replace fluorescent lamps using E-ballasts, but with its limitation on that it cannot replace the lamps with M-ballasts or no ballasts.

CN 101925229 A discloses a drive circuit device of LED tube, comprising: 1. a high frequency magnetic isolation transformerparallel connectingto rectifier bridge of the isolation transformer's output port and the high frequency condenser (Condenser I) at rectifier bridge's output port; 2. The rectifier bridge's output port as mentioned, parallel connectingto the high frequency Condenser I and both positive and negative electrode of the LED strip; 3. an input port of the high frequency magnetic isolation transformer as mentioned, connecting to pins at both fluorescent tubes' ends; 4. the input port of the high frequency magnetic isolation transformer as mentioned, series connecting to the low frequency rectifier bridge of the high frequency Condenser I and another high frequency condenser(Condenser II); 5. the output ports of the rectifier bridge and low frequency rectifier bridge as both mentioned, parallel connecting to high frequency Condenser I and both positive and negative electrode of the LED strip; 6. an input port of the high frequency magnetic isolation transformer as mentioned, and an input port of Condenser II separately connecting to pins at fluorescent tubes' both ends; 7. This circuit is compatible to the fixture with high frequency E-ballasts, low frequency M-ballasts or connecting directly to the commercial power network, but is not compatible to all types of ballasts and is flawed on high rate of noise interference.

### Summary of the Invention

This new application provide a LED tube power drive circuit, aiming to solve the problem that drive circuit which is compatible to commercial power and ballast, is unable to used with all types of ballasts.

A LED tube power drives circuit, comprising high-frequency power drive module, low-frequency power drive module, and switching-circuit for both modules.

When replacing fluorescent tubes with LED tubes, some lamp fixtures were already installed with E-ballasts/M-ballasts, and some ballasts are abandoned by the pass-by wire or even removed. This new application of power drive comprises high-frequency power drive module and low-frequency power drive module: switched by switching-circuit, high-frequency power drive module will be activated when lamps are mated with E-ballasts; low-frequency power drive module will be activated when mated with M-ballasts or the ballasts are abandoned by the pass-by wire or removed. The low-frequency power drive module as mentioned could use commercial power drive module, such as NXP SSL2109.

The high-frequency power drive module as mentioned could use CN 203596948U's LED drive circuit.

Switching-circuit could use ordinary switch device.

This new application also provides a LED tube, comprising the LED tubes power drive circuit as mentioned.

The LED tubes as mentioned can also be 2D tubes, linear tubes, looped tubes, PLL tubes or U-bent tubes.

For further notice, the LED tubes as mentioned are linear tubes, and high-frequency power drive module and low-frequency power drive module as mentioned are separately set at either end of the tube.

The LED tubes as mentioned are T8 tubes.

Two input ports of the low-frequency power drive module as mentioned, connect correspondingly to both bases of tubs' first end, either input port of the high-frequency power drive module as mentioned, connects to tube's both bases on the other end and to the bases on the first end by the switching circuit.

The switching-circuit as mentioned includes switch K1 and K2 which connect to the both bases of tubs' first end and the input port of high-frequency power drive module. Switches K1 and K2 as mentioned are formed to a toggle-switch.

The toggle switch as mentioned is installed in the cap of the tube, and side wall of the cap provides an open for the toggle of toggle-switch.

A slot to the toggle is set inside of the ringer outside of the cap as mentioned.

This new application allows the high-frequency power drive module to work with all E-Ballast, without being disturbed by the rest circuit.

### Brief description of the drawings

Fig.1 is the structural representation of the new application's power drive circuit;
Fig.2 is the structural representation of the new application's LED tube;
Fig. 3 is the exploded diagram of the new application's LED tube;
Fig. 4 is the exploded diagram of the new application's LED tube with aluminum lamp base;
Fig. 5 is the exploded diagram of the new application's LED tube with FA8 lamp base;
Fig. 6 is the exploded diagram of the new application's LED tube with R17D lamp base;
Fig. 7 is the exploded diagram of the new application's 2D tube;
Fig. 8 is the exploded diagram of the new application's looped tube;
Fig. 9 is the exploded diagram of the new application's PLL tube; and
Fig. 10 is the exploded diagram of the new application's U-bent tube.

### Detailed description of the drawings

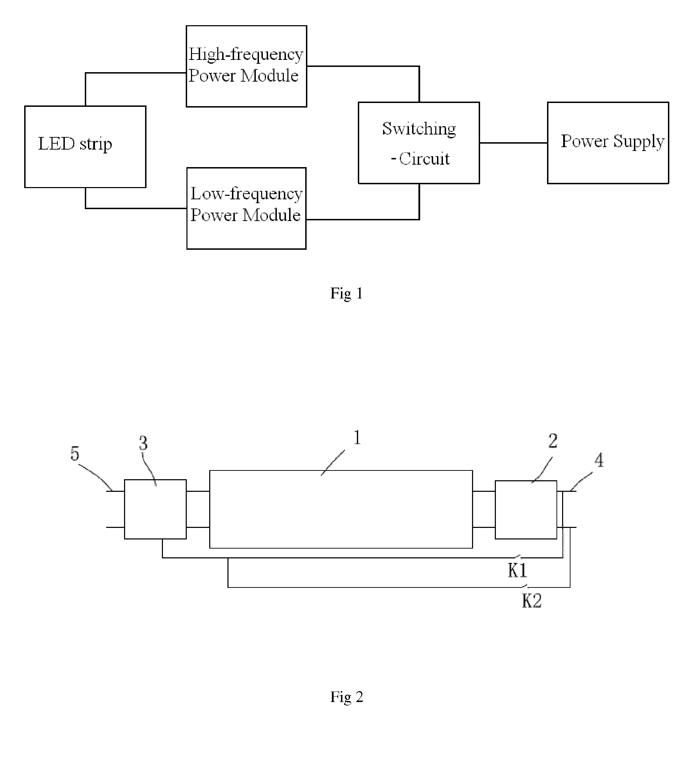

As shown in Fig.1, a LED drive comprises high-frequency power drive module and low-frequency power drive module and switching circuit for both modules. High-frequency power drive module as mentioned could use CN 203596948U's LED drive circuit; low-frequency power drive module as mentioned could use commercial power drive module, such as NXP SSL2109; Switching-circuit could use ordinary switch device. Switched by switching-circuit, high-frequency power drive module will be activated when lamps are mated with high-frequency power like E-ballasts; low-frequency power drive module will be activated when mated with low-frequency power like M-ballasts or commercial power directly.

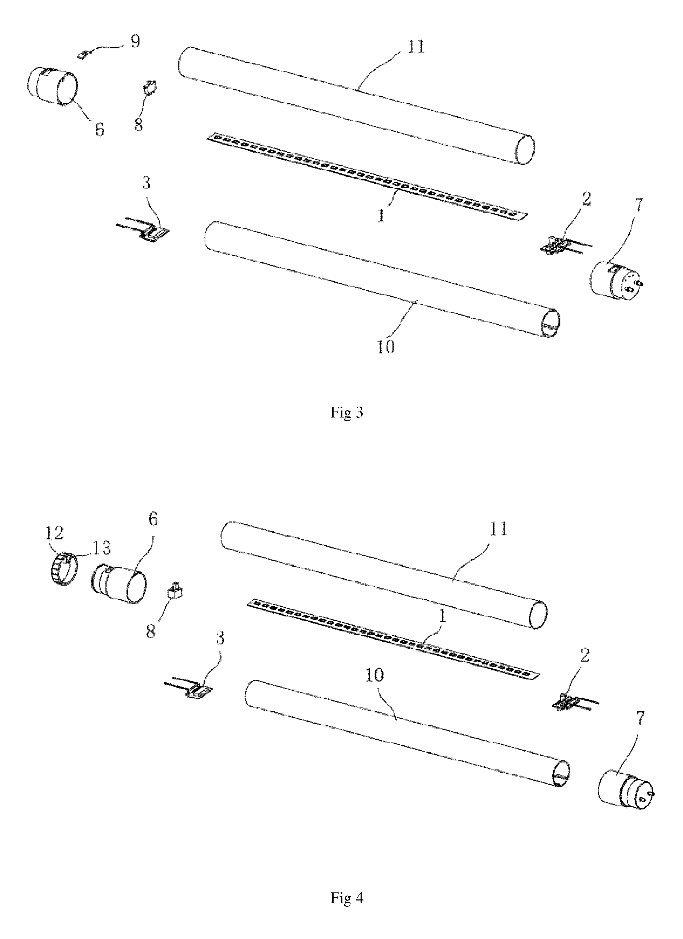

As shown in Fig. 3, a LED tube with LED drive circuit as mentioned comprises PC tube 10, glass tube 11, strip in the tube 1, and both lamp base at the tube's end 6&7; slot in PC tube 10, and LED strip 1 is installed into the PC tube through the slot. Low-frequency power drive module 2 and high-frequency power drive module 3 are separately set at either end of the tube's lamp base. Two pins at the right end connect to low-frequency power drive module's 2two input ports; two shorted pins at the left end connects to high-frequency power drive module's 3 one input port, and two pins connecting to low-frequency power drive module 2 also connect to high-frequency power drive module's 4 another input port through switching-circuit.

As shown in Fig. 2, the switching-circuit as mentioned includes switch K1 and K2 which connect to the both bases 4 of tubes' right end and the input port of high-frequency power drive module.

As shown in Fig. 3, switches K1 and K2 are formed to a toggle-switch 8 is installed in the left cap of the tube, and side wall of the cap provides an open for the toggle of toggle-switch for operators, and switch panel 9 is installed in the gap. High-frequency power drive module will be activated when lamps are mated with E-ballasts; low-frequency power drive module will be activated when mated with M-ballasts or the ballasts are abandoned by the pass-by wire, damaged or removed. It needs to be switched to activate either module manually, but it simplifies the circuit, keeps the drive circuit from being disturbed by the rest circuit, and ensures high-frequency drive circuit could match all types of E-ballasts.

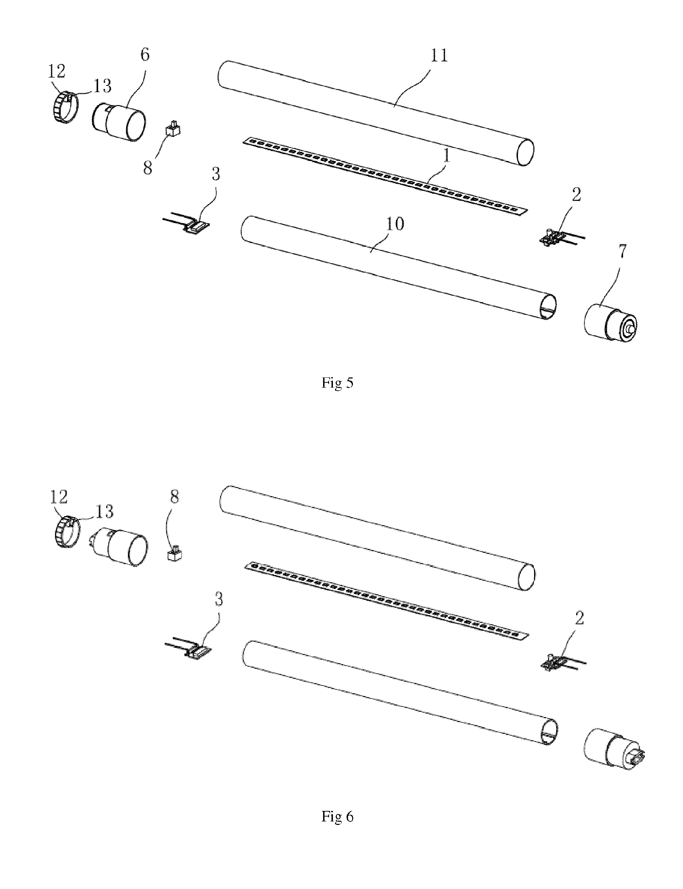

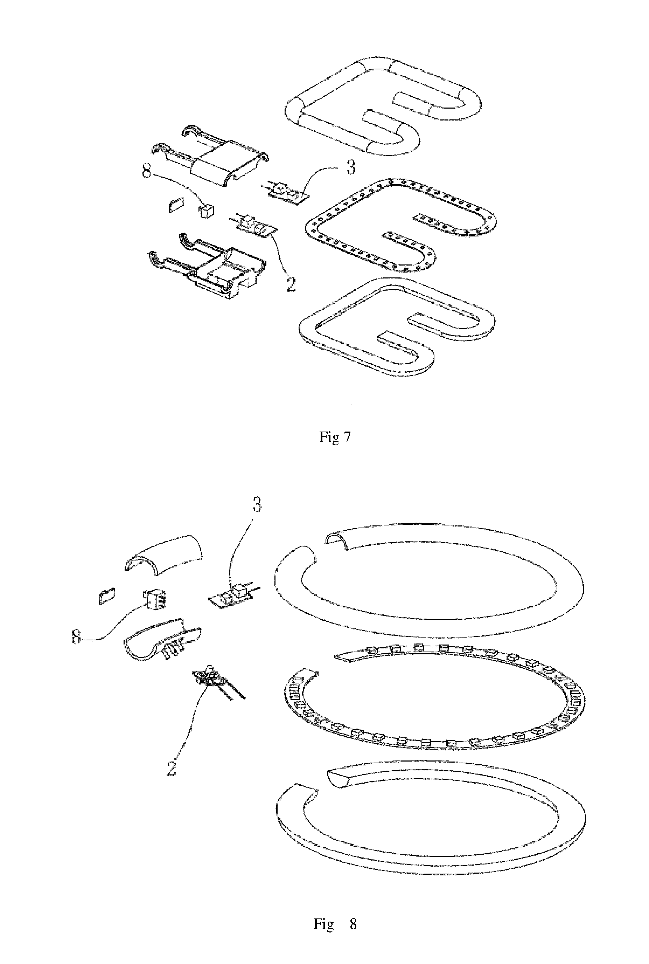

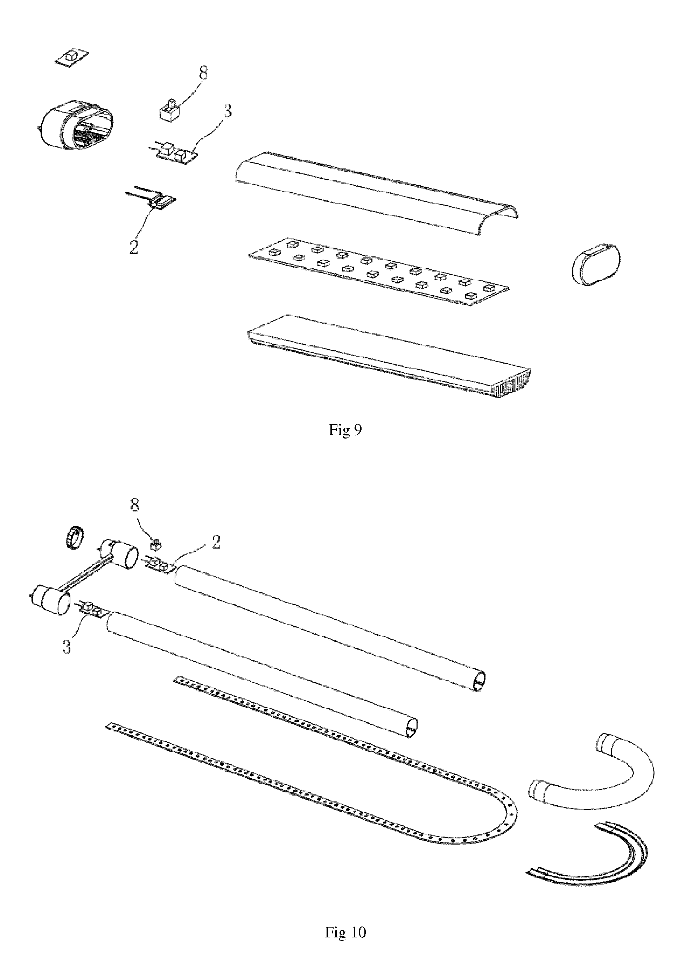

As shown in Figs. 4, 5, and 6, LED tube using aluminum base, FA8 base and R17D base, has tap 12 at the left end. Toggle switch 8 and toggle slot 13 are set in tap, to conceal the Toggle switch and simplifies operation. Antiskid wale is set outside of tap. As shown in Figs. 7 to 10, there is 2D tube, looped tube, PLL tube and U-bent tube. Their structures resemble the existing types', but differ at the high-frequency power drive module, low-frequency power drive module and toggle switch. All these tube has 4 pins, therefore the connecting mode is similar to diagram 2, but is different at the location of the drive module.

## Claims

1. A light emitting diode tube power module circuit, **characterized in that** comprising a high-frequency power module, a low-frequency power module, and switching circuit for both modules.

2. A light emitting diode tube, **characterized in that** comprising the light emitting diode tube power module circuit according to claim 1.

3. The light emitting diode tube according to claim 2, wherein the light emitting diode tube is formed as a 2D tube, a linear tube, a looped tube, a PLL tube and/or a U-bent tube.

4. The light emitting diode tube according to any of claims 2 and 3, wherein the high-frequency power drive module and the low-frequency power drive module are separately formed at either end of the tube.

5. The light emitting diode tube according to any of claims 2 to 4, wherein the tube comprises two bases and the low-frequency power drive module comprises two input ports connected to both bases of a tubes' first end, wherein each input port connects to both tubes' bases on a second tubes' end opposing the first end and to bases on the first end by the switching circuit.

6. The light emitting diode tube according to any of claims 2 to 5, wherein the switching circuit comprises switches (K1, K2) which connect to both bases of the tubes' first end and the input port of the high-frequency power drive module.

7. The light emitting diode tube according to claim 6, wherein each of the switches (K1, K2) is formed to a toggle-switch.

8. The light emitting diode tube according to claim 7, wherein at least one of the toggle switches(K1, K2) is installed in a cap of the tube, wherein a side wall of the cap comprises an opening for the toggle of toggle-switch (K1, K2).

9. The light emitting diode tube according to claim 8, wherein a slot to the toggle is provided inside of a ringer outside of the cap.

10. The light emitting diode tube according any of claims 2 to 9, wherein the tube is formed as a T8 tube.
